# FASCICULE DE BREVET EUROPEEN

(11) **EP 2 941 623 B1**
(45) Date de publication et mention de la délivrance du brevet: **20.09.2017**
(21) Numéro de dépôt: 14700153.1
(22) Date de dépôt: 07.01.2014
(51) Int. Cl.: G01D 4/00

(54) **PROCÉDÉ ET SYSTÈME D'INITIALISATION D'UN DISPOSITIF DE TÉLÉRELÈVE**
VERFAHREN UND ANORDNUNG ZUR INITIALISIERUNG EINER VORRICHTUNG ZUR FERNABLESUNG
METHOD AND SYSTEM FOR INITIALIZING A REMOTE READING DEVICE

(30) Priorité: 07.01.2013 FR 1350111
(43) Date de publication de la demande: 11.11.2015
(73) Titulaire: Sagemcom Energy & Telecom SAS, 92500 Rueil-Malmaison (FR)
(72) Inventeur: SABATIER, Pierre, 92500 Rueil Malmaison (FR)
(74) Mandataire: Lavialle, Bruno François Stéphane
(86) Numéro de dépôt international: PCT/EP2014/050155
(87) Numéro de publication internationale: WO 2014/106661

(56) Documents cités:
- EP-A1- 1 584 898
- US-A1- 2008 068 213
- US-A1- 2009 153 357
- US-B1- 6 853 309

## Description

### DOMAINE TECHNIQUE GÉNÉRAL ET ART ANTÉRIEUR

La présente invention est relative à l'initialisation de dispositifs de télérelève de compteur, notamment de compteur de fluide. Elle trouve avantageusement application, pour le relevé à distance de mesures de compteur de gaz, d'autres applications que les compteurs de gaz étant néanmoins possibles (compteurs d'eau, compteurs de chaleur, etc .). Les compteurs de fluide, et notamment ceux chez l'abonné, se présentent classiquement sous la forme d'un boîtier qui comporte une fenêtre transparente permettant la lecture d'un totalisateur numérique à roues graduées.

Il a déjà été proposé dans les documents EP1584898 et US853309 d'équiper de tels compteurs de systèmes de télérelève permettant de transmettre à distance la consommation relevée par le compteur.

Une problématique toutefois rencontrée avec de tels dispositifs de télérelève est celle de leur initialisation.

Il peut en effet arriver que les relevés de ces compteurs donnent des écarts par rapport au relevé fait visuellement sur les totalisateurs mécaniques des compteurs et que ces écarts soient dus non pas à une désynchronisation en fonctionnement ou à une fraude mais à une erreur dans le relevé initial sur le totalisateur.

Un but de l'invention est notamment de résoudre cette problématique.

### PRÉSENTATION GÉNÉRALE DE L'INVENTION

L'invention propose quant à elle un procédé d'initialisation d'un dispositif de télérelève destiné à être rapporté sur un compteur, caractérisé en ce que, le dispositif de télérelève et le compteur présentant chacun un marquage identifiant visible, on met en oeuvre les étapes suivantes lors de la mise en place du dispositif de télérelève :
- photographie du compteur et du dispositif de télérelève de façon à ce que les marquages de l'un et l'autre y soient visibles avec la valeur affichée par le totalisateur mécanique du compteur,
- mise en oeuvre d'un traitement de reconnaissance de formes sur la photographie pour en extraire des informations d'identification du compteur et du dispositif de télérelève, ainsi que la valeur d'initialisation du totalisateur mécanique,
- mémorisation de ces différentes informations dans une base de données.

Selon un mode de mise en oeuvre possible, on met également en oeuvre sur la photographie une analyse d'image afin de s'assurer du bon positionnement d'un capteur que comprend le dispositif de télérelève. Par exemple, on met en oeuvre sur la photographie un traitement graphique d'éléments géométriques remarquables, pour en extraire des informations de bon positionnement du capteur sur le compteur.

Egalement, lorsque le dispositif de télérelève comprend un capteur disposé sur une étiquette transparente, il est possible de mettre en oeuvre sur la photographie un traitement graphique pour s'assurer du collage de l'étiquette transparente sur le compteur. Par ailleurs, une photographie du compteur peut être traitée afin d'en déduire une tolérance pour le positionnement d'un capteur du dispositif de télérelève sur le compteur.

Avantageusement également, on mémorise dans la base de données avec ces informations la valeur d'index électronique du dispositif de télérelève au moment de cette initialisation.

Le traitement de reconnaissance de formes peut être réalisé par une unité de traitement à distance, la photographie étant prise au moyen d'un terminal apte à échanger avec cette unité de traitement.

Lors de la phase d'initialisation, le terminal peut échanger avec le dispositif de télérelève et recevoir de celui-ci la valeur d'index électronique.

L'invention concerne également un dispositif de télérelève qui comporte un marquage identifiant visible lorsqu'il est en place sur un compteur.

Dans un mode de réalisation, il comporte un boîtier d'électronique séparé d'une partie formant capteur intégrant un capteur de suivi de rotation.

Le marquage visible est alors par exemple porté par la partie formant capteur ou un support de fixation de celle-ci.

Notamment, un support peut être une plaque transparente dans laquelle le capteur est intégré et qui est apte à être rapportée sur une fenêtre de compteur.

Egalement, l'invention a pour objet un système de gestion d'un parc de compteurs et de dispositifs de télérelève qui comporte :
- une unité de traitement apte à mettre en oeuvre une reconnaissance de formes sur des photographies pour en extraire des informations d'identification de compteur et de dispositif de télérelève, ainsi que des valeurs d'initialisation du totalisateur mécanique,

- une base de données pour la mémorisation de ces différentes informations,
- au moins un terminal apte à acquérir des photographies d'un compteur et d'un dispositif de télérelève et à échanger avec l'unité de traitement lors d'une phase d'initialisation

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 représente schématiquement un compteur équipé d'un dispositif de télémesure conforme à un mode de réalisation possible de l'invention ;
- les figures 2 et 3 illustrent un traitement mis en oeuvre pour l'initialisation des dispositifs de télémesure de la figure 1 ;
- la figure 4 illustre un compteur sur lequel on rapporte le capteur d'un dispositif conforme à un autre mode de réalisation possible de l'invention.

### EXEMPLES DE PLUSIEURS MODES DE RÉALISATION

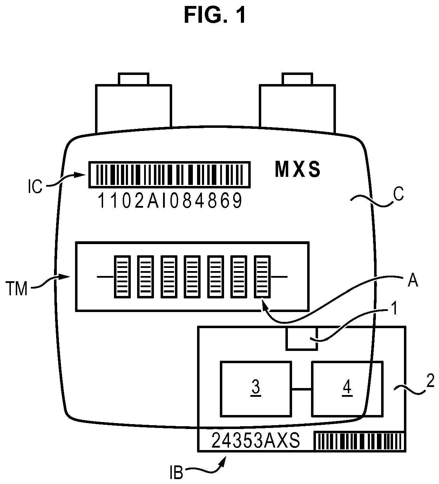

Le compteur C illustré sur la figure 1 comporte classiquement un totalisateur mécanique TM à roues.

Sa roue d'unité est équipée d'un aimant A qui permet la détection des tours de roue dudit totalisateur TM par un capteur 1 intégré au boîtier 2 d'un dispositif de télérelève rapporté sur ledit compteur C.

Un tel capteur 1 est par exemple un capteur d'impulsions du type ampoule Reed. Une électronique 3 dans le boîtier 1 permet de comptabiliser les impulsions. Les informations de relevé sont transmises à un serveur à distance via un transmetteur radio 4 qui est par exemple intégré au boîtier 2.

Les compteurs C portent habituellement au niveau de leur fenêtre de lecture ou au voisinage de celle-ci des informations d'identification IC (identifiants sous forme de chaines alphanumériques et/ou de codes-barres notamment de codes-barres 2D, par exemple).

Pour permettre la mise en oeuvre du procédé proposé, le boîtier 2 porte lui-même des informations d'identification (identifiant IB) qui sont visibles et sont susceptibles d'être lues lorsque le boîtier 2 est en place sur le compteur C. Ces informations d'identification IB peuvent être également sous forme de chaines alphanumériques et/ou de codes-barres notamment de codes-barres 2D.

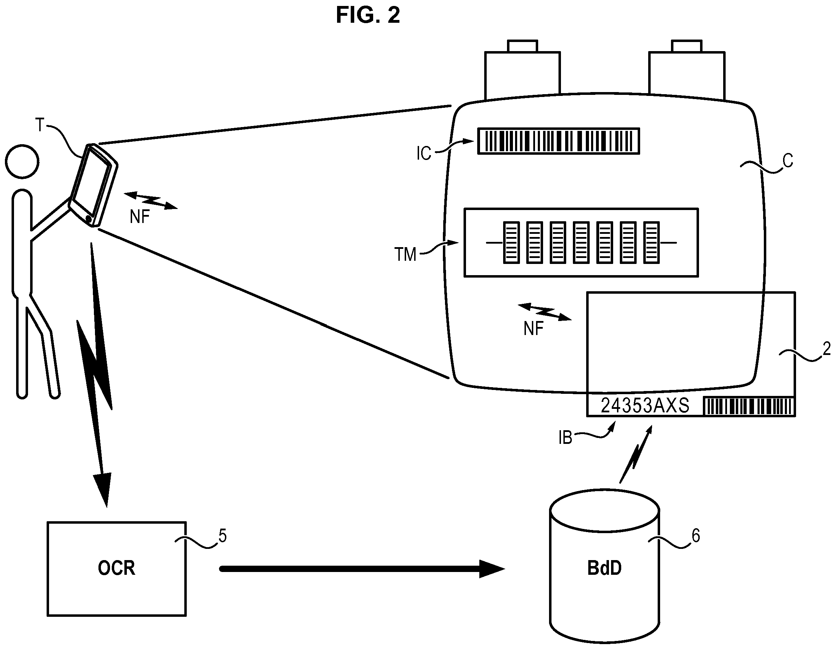

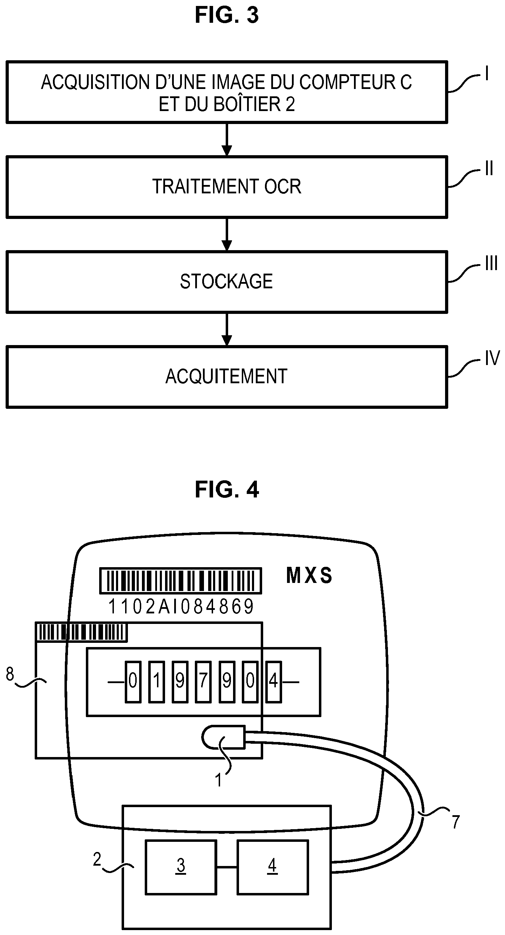

Ainsi que l'illustre les figures 2 et 3, lors de la mise ne place d'un tel boîtier 2 sur un compteur C, le technicien en charge de cette mise en place acquiert, au moyen d'un terminal T, une photographie du compteur C et du boîtier 2 (étape I). Il cadre son acquisition de façon à ce que les chiffres du totalisateur mécanique TM, l'identifiant IC du compteur C et l'identifiant IB du boîtier 2 y apparaissent.

On notera qu'à cet effet, le terminal T utilise un programme applicatif dédié qui aura été préalablement téléchargé.

Cette photographie est transmise à distance à une unité de traitement 5 qui met en oeuvre une reconnaissance de formes par exemple une reconnaissance de caractères OCR ou de codes-barres notamment de codes-barres 2D sur cette photographie (étape II), afin d'obtenir :
- la valeur d'initialisation du totalisateur mécanique,
- l'identifiant IC du compteur C,
- l'identifiant IB du boîtier 2.

La reconnaissance de forme permet également le cas échéant de déterminer la marque et le modèle du compteur C.

Également, une analyse d'image sur la même photographie permet de s'assurer du bon positionnement du capteur et de sa bonne fixation par collage sur le compteur (par exemple dans le cas de l'étiquette transparente). Ainsi, notamment, on peut mettre en oeuvre sur la photographie un traitement graphique d'éléments géométriques remarquables, par exemple des carrés, des mires optiques ou des traits de délimitation disposés sur la face visible du capteur, pour en extraire des informations de bon positionnement du capteur sur le compteur.

Egalement encore, lorsque le capteur est disposé sur une étiquette transparente, il est possible de mettre en oeuvre un traitement graphique sur la face visible de l'étiquette transparente, visible sur la photographie afin de repérer l'absence ou mauvais collage, sur le compteur. Par exemple par seuillage numérique à partir de la photographie numérique de zones avec différents contraste.

Les différentes informations relevées sur l'image lors de la reconnaissance de formes sont ensuite transmises à une base de données 6 où elles sont stockées, le cas échéant, avec le numéro de contrat ou de client associé à l'identifiant de compteur IC qui aura été ainsi relevé (étape III).

L'unité de traitement 5, la base de données 6 et les terminaux T sont par exemple dédiés à la gestion d'un parc de dispositifs de télérelève donnés. Ils font partie d'un même système de gestion.

Par ailleurs, le boîtier 2 peut être équipé de moyens d'interface NFC lui permettant d'échanger avec le terminal T du technicien au moment de l'initialisation. À l'occasion de cet échange, le boîtier 2 transmet par exemple au terminal T la valeur initiale de son index électronique au moment de cette phase d'initialisation (laquelle n'a pas de corrélation avec la valeur affichée sur le totalisateur mécanique TM).

Cette valeur d'index est elle-même transmise avec la photographie prise par le technicien et est stockée avec les autres informations dans la base de données 6, afin d'être associée à la valeur initiale du totalisateur mécanique.

Par ailleurs, lors de la phase d'initialisation une photographie du compteur peut faire l'objet d'un traitement, sur le terminal T du technicien ou à distance, afin de déduire, par exemple en fonction du type de compteur (marque, millésime, modèle, etc...), la localisation dans le volume possible du champ magnétique induit par l'aimant du compteur en question et donc en déduire également les tolérances de positionnement du capteur sur le compteur.

Le volume possible aura été déterminé préalablement soit par simulation soit par mesure.

Une fois les opérations de reconnaissance de formes et de stockage réalisées, un signal d'acquittement est transmis au terminal T du technicien pour lui signifier que l'ensemble des informations qu'il a envoyées ont bien été lues et sont prises en compte par le système (étape IV).

La phase d'initialisation est alors terminée.

En variante, il est possible de prévoir que le capteur 1 est séparé du reste du boîtier 2 et est par exemple relié à celui-ci par une liaison filaire 7.

Dans un mode de réalisation possible, le capteur 1 est intégré à une étiquette 8 transparente en matière plastique qui est rapportée sur la fenêtre de lecture du compteur C. Le capteur d'impulsions 1 séparé du boîtier 2 peut être de tout type et est par exemple un capteur à effet Hall ou un capteur magnéto-résistif. Il est par exemple d'une structure à base de silicium.

L'étiquette 8 peut être utilisée pour porter l'identifiant du dispositif de télérelève que constituent l'ensemble constitué par le capteur 1 (et l'étiquette 8 qui le porte), le boîtier 2 et la liaison filaire 7.

Ces informations sont alors positionnées sur cette plaque de façon à ne pas se superposer, lorsque ladite plaque est en place, à d'autres informations qui doivent rester visibles, et en particulier à des informations d'identification qui doivent être lues lors de la phase d'initialisation.

## Revendications

1. Procédé d'initialisation d'un dispositif de télérelève destiné à être rapporté sur un compteur (C), **caractérisé en ce que**,
le dispositif de télérelève et le compteur (C) présentant chacun un marquage identifiant visible (IC, IB), on met en oeuvre les étapes suivantes lors de la mise en place du dispositif de télérelève :
- photographie (I) du compteur et du dispositif de télérelève de façon à ce que les marquages de l'un et l'autre y soient visibles avec la valeur affichée par le totalisateur mécanique (TM) du compteur,
- mise en oeuvre d'un traitement de reconnaissance de formes sur la photographie (II) pour en extraire des informations d'identification du compteur et du dispositif de télérelève (IC, IB), ainsi que la valeur d'initialisation du totalisateur mécanique,
- mémorisation (III) de ces différentes informations dans une base de données (6).

2. Procédé selon la revendication 1, **caractérisé en ce qu'**on met également en oeuvre sur la photographie une analyse d'image afin de s'assurer du bon positionnement d'un capteur que comprend le dispositif de télérelève.

3. Procédé selon la revendication 2, **caractérisé en ce que** l'on met en oeuvre sur la photographie un traitement graphique d'éléments géométriques remarquables, pour en extraire des informations de bon positionnement du capteur sur le compteur.

4. Procédé selon la revendication 1, **caractérisé en ce que**, lorsque le dispositif de télérelève comprend un capteur disposé sur une étiquette transparente, on met en oeuvre sur la photographie un traitement graphique pour s'assurer du collage de l'étiquette transparente sur le compteur.

5. Procédé selon la revendication 1, **caractérisé en ce qu'**une photographie du compteur est traitée afin d'en déduire une tolérance pour le positionnement d'un capteur du dispositif de télérelève sur le compteur.

6. Procédé selon la revendication 1, **caractérisé en ce qu'**on mémorise dans la base de données (6) avec ces informations la valeur initiale d'index électronique du dispositif de télérelève au moment de cette initialisation.

7. Procédé selon la revendication 1, **caractérisé en ce que** le traitement de reconnaissance de formes est réalisé par une unité de traitement (5) à distance, la photographie étant prise au moyen d'un terminal (T) apte à échanger avec cette unité de traitement.

8. Procédé selon les revendications 6 et 7 prises en combinaison, **caractérisé en ce que**, lors de la phase d'initialisation, le terminal (T) échange avec le dispositif de télérelève et reçoit de celui-ci la valeur d'index électronique.

9. Système de gestion de dispositifs de télérelève, les dispositifs de télérelève comportant un marquage identifiant visible (IB) lorsqu'ils sont en place sur un compteur (C) pour la mise en oeuvre du procédé selon l'une des revendications précédentes,
ledit système de gestion étant **caractérisé en ce qu'**il comporte :
• au moins un terminal (T) apte à acquérir une photographie d'un compteur et d'un dispositif de télérelève et à échanger avec une unité de traitement (5) lors d'une phase d'initialisation,
• ladite unité de traitement (5) apte à mettre en oeuvre une reconnaissance de formes sur la photographie et à en extraire des informations d'identification de compteur et de dispositif de télérelève (IC, IB), ainsi que des valeurs d'initialisation du totalisateur mécanique,
• une base de données (6) pour la mémorisation de ces différentes informations.

10. Système de gestion selon la revendication 9, **caractérisé en ce qu'**un dispositif de télérelève comporte un boîtier d'électronique séparé d'une partie formant capteur intégrant un capteur de suivi de rotation.

11. Système de gestion selon la revendication 10, **caractérisé en ce que** le marquage visible est porté par la partie formant capteur ou un support de fixation de celle-ci.

12. Système de gestion selon la revendication 11, **caractérisé en ce que** le support est une plaque transparente dans laquelle le capteur est intégré et qui est apte à être rapportée sur une fenêtre de compteur.

## Patentansprüche

1. Verfahren zur Initialisierung einer Fernablesevorrichtung, die dazu bestimmt ist, an einem Zähler (C) angebracht zu werden, **dadurch gekennzeichnet, dass**
man, unter Berücksichtigung, dass die Fernablesevorrichtung und der Zähler (C) jeweils eine sichtbare Identifizierungskennzeichnung (IC, IB) aufweisen, die folgenden Schritte während des Anbringens der Fernablesevorrichtung durchführt:
- Fotografieren (I) des Zählers und der Fernablesevorrichtung derart, dass die Kennzeichnungen von beiden zusammen mit dem von dem mechanischen Summenzählwerk (TM) des Zählers angezeigten Wert darauf sichtbar sind,
- Durchführen einer Formerkennungsverarbeitung an der Fotographie (II), um daraus Identifizierungsinformationen des Zählers und der Fernablesevorrichtung (IC, IB) sowie den Initialisierungswert des mechanischen Summenzählwerks zu gewinnen,
- Speichern (III) dieser verschiedenen Informationen in einer Datenbank (6).

2. Verfahren nach Anspruch 1, **dadurch gekennzeichnet, dass** man an der Fotographie ferner eine Bildanalyse durchführt, um die korrekte Positionierung eines Sensors, den die Fernablesevorrichtung umfasst, sicherzustellen.

3. Verfahren nach Anspruch 2, **dadurch gekennzeichnet, dass** man an der Fotographie eine graphische Verarbeitung von auffälligen geometrischen Elementen durchführt, um daraus Informationen über die korrekte Positionierung des Sensors an dem Zähler zu gewinnen.

4. Verfahren nach Anspruch 1, **dadurch gekennzeichnet, dass**, wenn die Fernablesevorrichtung einen Sensor umfasst, der an einem transparenten Schild angeordnet ist, man an der Fotographie eine graphische Verarbeitung durchführt, um sicherzustellen, dass das transparente Schild an dem Zähler klebt.

5. Verfahren nach Anspruch 1, **dadurch gekennzeichnet, dass** eine Fotographie des Zählers verarbeitet wird, um daraus eine Toleranz für die Positionierung eines Sensors der Fernablesevorrichtung an dem Zähler herzuleiten.

6. Verfahren nach Anspruch 1, **dadurch gekennzeichnet, dass** man in der Datenbank (6) zusammen mit diesen Informationen den Anfangswert eines elektronischen Index der Fernablesevorrichtung zum Zeitpunkt dieser Initialisierung speichert.

7. Verfahren nach Anspruch 1, **dadurch gekennzeichnet, dass** die Formerkennungsverarbeitung von einer Fernverarbeitungseinheit (5) durchgeführt wird, wobei die Fotographie mittels eines Terminals (T) gemacht wird, der dazu geeignet ist, sich mit dieser Verarbeitungseinheit auszutauschen.

8. Verfahren nach den Ansprüchen 6 und 7, in Kombination genommen, **dadurch gekennzeichnet, dass** sich der Terminal (T) während der Initialisierungsphase mit der Fernablesevorrichtung austauscht und von dieser den Wert des elektronischen Index empfängt.

9. System zum Verwalten von Fernablesevorrichtungen, wobei die Fernablesevorrichtungen eine sichtbare Identifizierungskennzeichnung (IB) umfassen, wenn sie an dem Zähler (C) angebracht sind, zum Durchführen des Verfahrens nach einem der vorhergehenden Ansprüche, wobei das Verwaltungssystem **dadurch gekennzeichnet ist, dass** es umfasst:
• mindestens einen Terminal (T), der dazu geeignet ist, eine Fotographie eines Zählers und einer Fernablesevorrichtung anzufertigen und sich während einer Initialisierungsphase mit einer Verarbeitungseinheit (5) auszutauschen,
• wobei die genannte Verarbeitungseinheit (5) dazu geeignet ist, eine Formerkennung an der Fotografie durchzuführen und daraus Zähler- und Fernablesevorrichtungsidentifizierungsinformationen (IC, IB) sowie Initialisierungswerte des mechanischen Summenzählwerks zu gewinnen,
• eine Datenbank (6) zur Speicherung dieser verschiedenen Informationen.

10. Verwaltungssystem nach Anspruch 9, **dadurch gekennzeichnet, dass** eine Fernablesevorrichtung ein Elektronikgehäuse umfasst, das von einem den Sensor bildenden Teil getrennt ist, in dem ein Rotationsverfolgungssensor integriert ist.

11. Verwaltungssystem nach Anspruch 10, **dadurch gekennzeichnet, dass** die sichtbare Markierung von dem den Sensor bildenden Teil oder einem Träger zur Befestigung desselben getragen wird.

12. Verwaltungssystem nach Anspruch 11, **dadurch gekennzeichnet, dass** der Träger eine transparente Platte ist, in der der Sensor integriert ist und die dazu geeignet ist, an einem Zählerfenster befestigt zu werden.

## Claims

1. Method of initializing a remote reading device intended to be hooked up to a meter (C), **characterized in that**,
the remote reading device and the meter (C) each exhibiting a visible identifying marking (IC, IB), the following steps are implemented during the fitting of the remote reading device:
- capturing a photograph (I) of the meter and of the remote reading device so that the markings of one and the other are visible therein with the value displayed by the mechanical totalizer (TM) of the meter,
- implementation of shape recognition processing on the photograph (II) to extract therefrom information identifying the meter and the remote reading device (IC, IB), as well as the initialization value of the mechanical totalizer,
- storage (III) of these various items of information in a database (6).

2. Method according to claim 1, **characterized in that** image analysis is also implemented on the photograph to ensure the correct positioning of a sensor contained in the remote reading device

3. Method according to claim 2, **characterized in that** a graphic processing of noticeable geometrical elements is implemented on the photograph, to extract therefrom information on the correct positioning of the sensor on the meter.

4. Method according to claim 1, **characterized in that**, when the remote reading device comprises a sensor arranged on a transparent label, graphic processing is implemented on the photograph to ensure the gluing of the transparent label on the meter.

5. Method according to claim 1, **characterized in that** a photograph of the meter is processed in order to deduce the tolerance on the positioning of a sensor of the remote reading device on the meter.

6. Method according to claim 1, **characterized in that** the electronic index value of the remote reading device at the moment of this initialization is stored in the database (6) with these items of information.

7. Method according to claim 1, **characterized in that** the shape recognition processing is carried out by a remote processing unit (5), the photograph being taken by means of a terminal (T) capable of exchanging with this processing unit.

8. Method according to claims 6 and 7 taken together, **characterized in that**, in the initialization phase, the terminal (T) exchanges with the remote reading device and receives the electronic index value from it.

9. System for managing remote reading devices, the remote reading devices including a visible identifying marking (IB) when they are in place on a meter (C) for the implementation of the method according to one of the preceding claims, said management system being **characterized in that** it includes:
• at least one terminal (T) capable of acquiring a photograph of a meter and of a remote reading device and of exchanging with a processing unit (5) in an initialization phase,
• said processing unit (5) capable of implementing shape recognition of the photograph and of extracting therefrom information identifying the meter and the remote reading device (IC, IB), as well as initialization values of the mechanical totalizer,
• a database (6) for storing these various items of information.

10. Management system according to claim 9, **characterized in that** a remote reading device includes an electronic terminal separated from a sensor-forming part incorporating a rotation tracking sensor.

11. Management system according to claim 10, **characterized in that** the visible marking is borne by the sensor-forming part or a fastening support thereof.

12. Management system according to claim 11, **characterized in that** the support is a transparent plate wherein the sensor is incorporated and which is capable of being attached to a meter window.
